# EUROPEAN PATENT SPECIFICATION

(11) **EP 0 865 896 B1**
(45) Date of publication and mention of the grant of the patent: **27.11.2002**
(21) Application number: 97830113.3
(22) Date of filing: 12.03.1997
(51) Int. Cl.: B29C 47/00, B29C 47/08, B29C 47/52, B29C 47/38

(54) **Extrusion device**
Extrusionsvorrichtung
Appareil d'extrusion

(43) Date of publication of application: 23.09.1998
(73) Proprietor: Gimac di Maccagnan Giorgio, 21040 Castronno (Varese) (IT)
(72) Inventor: Maccagnan, Giorgio, 21040 Castronno (Varese) (IT)
(74) Representative: Tansini, Elio Fabrizio

(56) References cited:
- EP-A- 0 658 414
- DE-A- 1 778 369
- DE-A- 2 649 045
- US-A- 2 693 348
- US-A- 3 850 415
- US-A- 4 491 417

## Description

The present invention relates to an extrusion device.

As well known, extrusion devices are apparatuses intended for working materials like thermoplastic resins and ceramic blends for example, for continuous production of semifinished products such as section members, the section of which is set by the shape of the extruder mounted on the extrusion head.

Extrusion devices are usually comprised of one or more hoppers, an advance system (usually heat conditioned by electric heating elements and cooling fans) and an extrusion head placed downstream of the advance system.

At the area where the advance system operates, the material changes from a solid state to a melted state so that it can be conveniently pressure-extruded through the head.

Advance systems presently available on the market substantially are of two different typologies.

A first typology consists of an advance system comprising a housing or cylinder inside which a rotating worm screw operates, by which the material to be extruded is submitted to a compression, transportation and friction work.

For example, it is known from US 4491417 a single screw extruder device comprising a supporting barrel and a cylindrical rotor embedded into the barrel. The inner surface of the barrel presents helical channels , within which the rotor is rotatably engaged.

Material is fed onto the moving rotor surface, so as to form rolling banks engaging the upstream flank of the helical channels and the rotor surface itself; in this way, axial advancement of the material is performed.

The material, simultaneously submitted to heating, plasticizes and is pushed towards the cylinder outlet . where the extrusion head is located.

Depending on the nature of the material to be worked, the worm screw will have a profile and pitch of different conformation and in conclusion different features to meet the encountered requirements by turns.

Although single-screw extrusion devices are widespread, they however have several drawbacks and operating limits.

In particular, single-screw extrusion devices have a poor capability to mix the material. In other words, when the use of several materials is needed and these materials must be homogeneously mixed together before reaching the extrusion head, single-screw extrusion devices appear of very low efficiency in that the action they exert is a mere compression and friction action without carrying out an efficient rolling action that, as known, causes mutual mixing and dispersion of the different materials and additives, if any.

It is also to note that single-screw extrusion devices have limited production capacities (the motive power being the same) which are often insufficient for some production requirements.

In addition, single-screw extrusion devices are unable to conveniently carry out, together with the thermoplastic material, feeding of possible substances of different particle sizes and physical features such as powders, mineral fillers, pigments, paste, etc.

In an attempt to solve the above mentioned drawbacks, a second type of extrusion device has recently become available on the market, in which the advance system is comprised of two work screws which are disposed alongside each other and can be of a co-rotating or counter-rotating type.

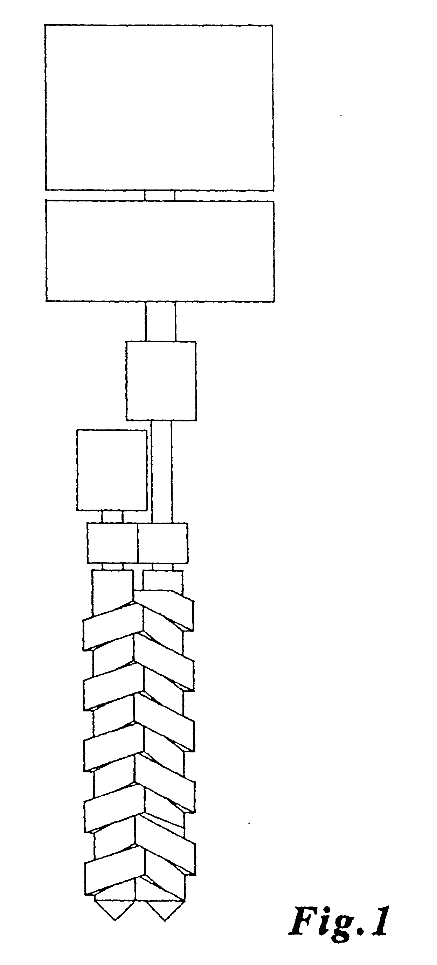

In the accompanying figures 1, 2 and 3 a kinematic mechanism relating to a twin-screw extrusion device is diagrammatically shown which comprises first and second counter-rotating screws which are connected by respective movement-transmitting gears to a motor drive optionally provided with a reduction motor.

In order to withstand axial thrusts exerted on the first and second screws, thrust bearings disposed axially offset relative to each other are provided.

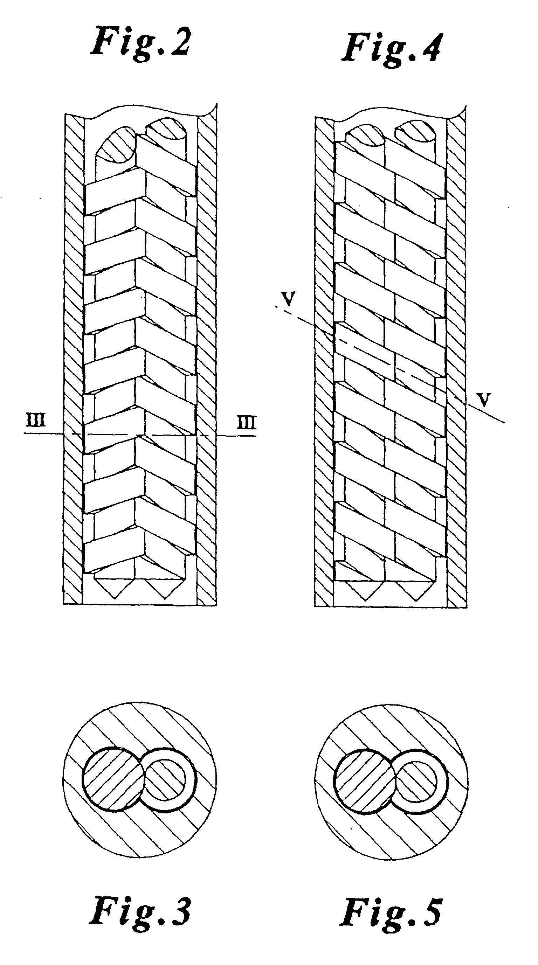

Shown in Figs. 4 and 5 is, instead, a diagram relating to a twin-screw extrusion device provided with co-rotating screws.

In both cases one can see that screws are coaxially housed within two cylindrical cavities or bores formed in the housing.

The twin-screw extrusion devices briefly described above have greatly higher production capacities than those of the single-screw extrusion devices, power being the same, and in addition they succeed in obtaining products having a good homogeneity degree even when starting from different base materials.

This is due to the fact that, in addition to compression and friction work, twin-screw extrusion devices succeed in offering an important rolling work of the thermoplastic material, thereby ensuring an efficient dispersion of the different materials into each other. In other words, twin-screw extrusion devices have an operating behaviour which can be partly comparable to that of two rolls in a calender and are therefore preferred, when two or more products are to be made homogeneous.

Due to the great homogenization capability of the materials to be extruded, twin-screw devices are surely the most preferred advance devices in most applications presently on the market.

Twin-screw systems however are problematic as regards costs and poor flexibility of same. Actually, in case of breaking of one component, the whole kinematic mechanism may become damaged. As a matter of fact, it is to note that in twin-screw systems, motor drive, transmission gears and screws form a unitary set necessarily operating mechanically.

Feeding systems for extrusion devices of the twin-screw type however, while offering a great homogenization capability of the material, have proved to be susceptible of further improvements from this very point of view. It is in fact to note that the surface actually carrying out the material rolling and therefore homogenization, is preset and not adjustable, in that the advance screws, due to their own nature, have a helix on their outer surface which is exactly intended for defining the advance system. Therefore, no true surfaces of cylindrical extension are present in which the material may undergo a rolling operation capable of adjustment depending on progress.

In addition, the operating capabilities of known twin-screw devices are in any case limited. Actually, due to the presence of interpenetrating helices, the two screws are prevented from being set in rotation at differentiated angular speeds. Sometimes this limitation can be very important in that, since the materials to be mixed together or blended may be varied, suitable adjustment of the rolling phenomena may be advantageous. For doing so however, in traditional twin-screw devices, replacement of the whole driving set (screw, transmission gears) would be necessary each time feeding and related mixing of materials having differentiated features and dispersion qualities is to be carried out.

A further limitation of traditional twin-screw devices is their substantially incapability to operate at low flow rates per hour. Therefore, when twin-screw systems are to be applied to extrusion devices of reduced hour production, reduction of the diameter of each screw is needed in order to lower the flow rate of the whole advance device.

In any case, presently diameters lower than 14-16 mm have never been reached because too small sections reduce the screw strength and cause difficulties in the material progress, particularly at the housing or cylinder entry where the material typically is in the form of pellets (granular form) or powder or in any case has an uneven conformation.

In addition, in spite of the diameter of each screw being reduced, under operating conditions these screws produce very important axial thrusts so that the use of thrust systems should be required and the latter, taking into account the involved forces, should have such radial sizes that they could not be used on screws, due to the reduced distance between centres existing between them.

Theoretically, hydraulic thrust systems or bearings of reduced radial bulkiness and exclusively planned for this specific application could be employed.

On the other hand, from a strictly economical point of view, making thrust bearings or other thrust systems of reduced radial bulkiness exclusively envisaged for application to twin-screw extrusion devices of reduced flow rate and reduced screw diameter cannot even be proposed, taking into account the relatively low number of pieces to be usually produced for these modified devices.

Under this situation, it is a fundamental object of the present invention to provide an extrusion device capable of overcoming all above mentioned drawbacks and limitations and in particular adapted to improve the material homogenization capability as compared with presently known systems, while at the same time being of easy manufacture, easy use and readily adaptable to the different operating requirements arising in time.

In particular, it is a further object of the invention to provide an extrusion device capable of operating in an excellent manner even in case of reduced production per hour, which is typical of microextrusion devices.

With reference to twin-screw systems, it is an important object of the invention to provide an extrusion device in which the angular rotational speed of each of the two shafts can be adjusted, depending on requirements.

With reference, on the contrary, to either single-screw, twin-screw or multi-screw systems, it is an object of the invention to provide a device enabling the axial thrust exerted on the thrust systems associated with the shaft/shafts to be reduced and transportation to be improved, and also capable of operating in an excellent manner even when abrasive or chemically aggressive materials are to be worked.

Yet another object of the invention is to provide an extrusion device in which the advance system is such accomplished as to enable employment of screws or shafts of very reduced diameter, without on the other hand requiring the use of expensive thrust bearings or systems expressly made for this application, employment of traditional thrust systems of relatively high radial bulkiness being on the contrary allowed.

The foregoing and further objects that will become more apparent in the progress of the present description are substantially achieved by an extrusion device as set forth in the appended claims.

Further features and advantages will be best understood from the detailed description of a preferred but non-exclusive embodiment of an extrusion device in accordance with the invention, given hereinafter by way of nonlimiting example, with reference to the accompanying drawings, in which:
- Fig. 1 diagrammatically shows a traditional advance device of the twin-screw type, provided with counter-rotating screws;
- Fig. 2 shows the screws of the device in Fig. 1 inserted in a housing or cylinder;
- Fig. 3 is a sectional view taken along line III-III in Fig. 2;
- Fig. 4 shows two screws of a traditional twin-screw extrusion device of the co-rotating type, inserted in a respective housing;
- Fig. 5 is a sectional view taken along line V-V in Fig. 4;
- Fig. 6 diagrammatically shows an extrusion device in accordance with the present invention;
- Fig. 7 is a detail of the device seen in Fig. 6, showing the advance means associated with the device in reference in a more specific manner;
- Fig. 8 is a sectional view taken along line VIII-VIII in Fig. 7;
- Fig. 9 is a longitudinal sectional view taken along line IX-IX in Fig. 7;
- Fig. 10 shows a possible alternative embodiment of the advance means to be associated with the extrusion device in accordance with the present invention;
- Fig. 11 is a sectional view taken along line XI-XI in Fig. 10;
- Fig. 12 is a sectional view taken along line XII-XII of the means shown in Fig. 10.

With reference to the accompanying drawings, an extrusion device in accordance with the present invention has been generally identified by reference numeral 1.

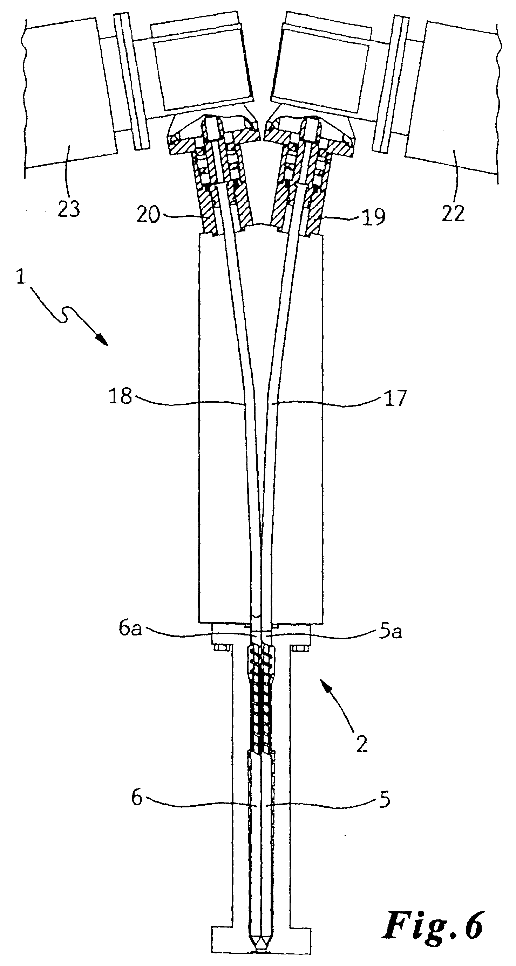

As shown in Figs. 6, 9 and 12, the device 1 comprises a feed station 2 for feeding at least one predetermined material to be extruded.

The feed station may consist of one or more hoppers 2a, depending on whether one material or several materials are wished to be worked, which materials will have to be conveniently blended during working so as to form a homogeneous dispersion, as better clarified in the following. Clearly, it will be possible to operate either with several mixtures directly pre-mixed in a single hopper or also with several hoppers disposed in cascade along the longitudinal extension of the housing.

Operating downstream of the feed station 2 is advance means 3 comprising a housing or cylinder 4 rotatably holding, at the inside thereof, at least one first and, in the case of twin-screw extrusion devices, also one second shaft, 5 and 6 respectively, which are positioned in mutual side-by-side relationship.

It is to note that in the following description and drawings reference has been made to twin-screw devices.

Obviously, this is not to be intended in a limiting sense in that many of the inventive features can be used on single-screw and multi-screw devices as well.

It is to point out that from a construction point of view, the hopper or hoppers 2a forming the feed station are usually employed at one end of, or along the housing or cylinder.

Finally, downstream of housing 2 there is an outlet orifice, generally consisting of an extrusion head 7 which is conventionally provided with an extruder arranged to form the material to be extruded according to desired profiles.

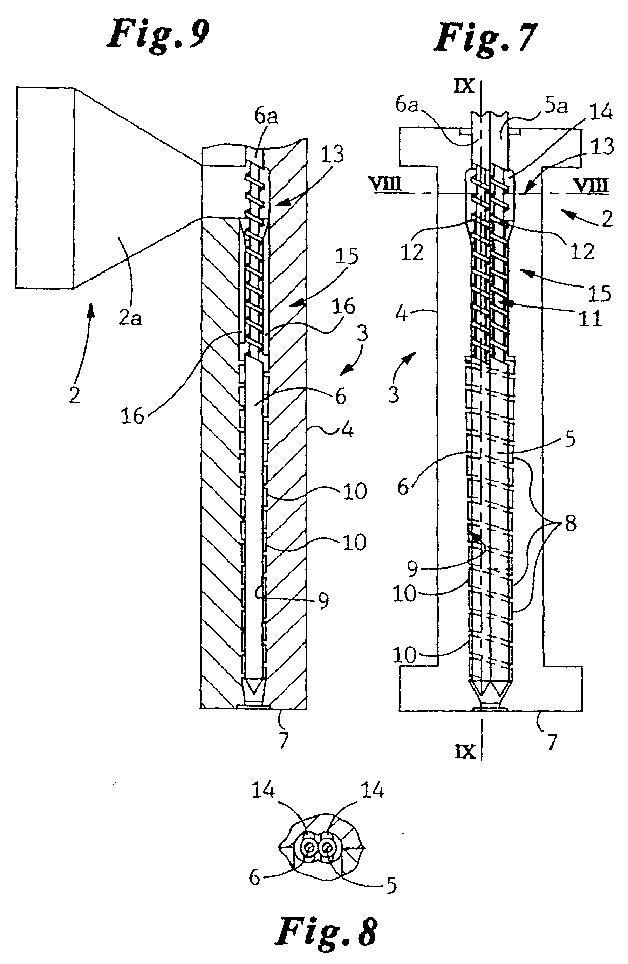

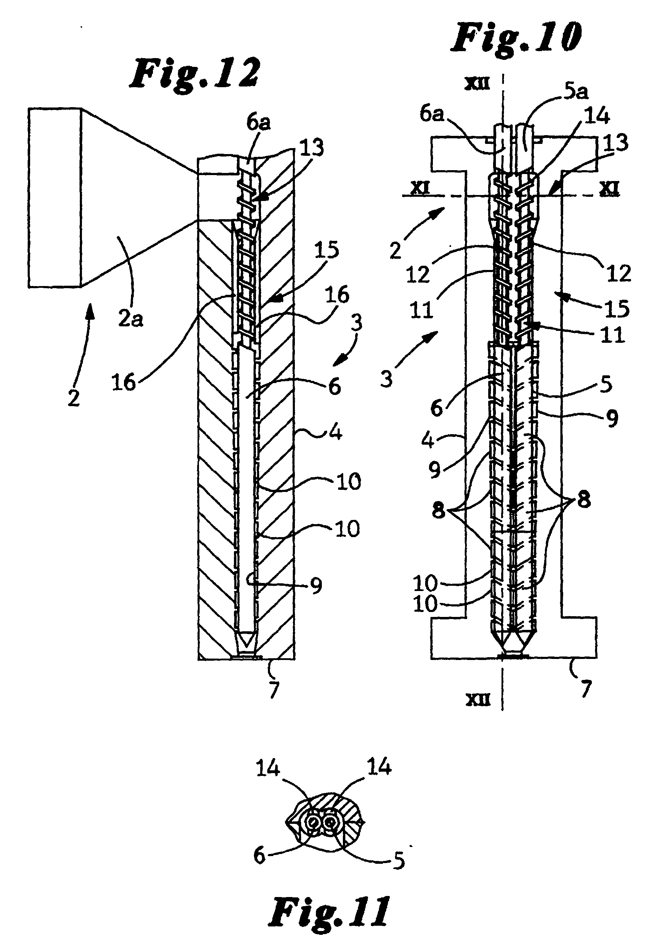

In greater detail, it is to point out that the first and optionally the second shaft advantageously have at least one operating length 8 extending within the housing 4 and having smooth surfaces. The operating length, as seen in particular in Figs. 7 and 10, has a longitudinal extension interesting a prevailing portion of the longitudinal extension of the housing.

The housing, at least at the operating length, is provided with active surfaces 9 facing the first and second shafts which are provided with shapings 10 adapted to define an axial movement of the material when the first and second (if present) shafts are set in rotation. More particularly, these shapings substantially define female threads having a helix of a longitudinally constant or variable pitch with a longitudinally constant or variable depth.

Practically, the active surfaces 9 in the case of twin-screws provided within the housing are defined by mutually-facing cylindrical-surface portions intersecting at common generatrices (see in this connection Figs 8 and 11). It is to note that female threads can be either interpenetrating or not.

In turn, shapings or threads formed in each of said cylindrical active surfaces 9 can have different conformations depending on whether the shafts are co-rotating (Fig. 7) or counter-rotating (Fig. 10).

In more detail, in the case in which the first and second shafts 5 and 6 are co-rotating, shapings or threads defined in the cylindrical active surfaces have helices which, section by section, have the same inclination and arrangement one in the extension of the other.

On the contrary, if the first and second shafts 5 and 6 operate in counter-rotation (Fig. 10), helices of shapings or threads defined in each cylindrical active surface 9 have, section by section, an opposite inclination with the same or a different pitch, depending on requirements, and they are of the single-threaded or double-threaded type.

Practically, by virtue of the particular conformation of the first and second (if present) shafts involving smooth surfaces, the compression and axial-thrust work is substantially exerted by the shapings or threads present on the active surface of the housing.

The shaft or shafts, on the contrary, perform a tangential-movement work of the material and substantially operate as calender cylinders, thereby ensuring an optimal blending, and consequently homogenization, if several mixtures to be dispersed into each other are used.

It is also to point out that in order to promote axial movement of the material entering housing 4, the first and, in the case of twin-screw systems, the second shafts, 5 and 6 respectively, preferably have an initial length 11 provided with an outer thread 12, of same or opposite inclination, depending on whether co-rotating shafts or counter-rotating shafts respectively are being used.

In turn, housing 4 has an initial length 13 substantially disposed at the area in which said hoppers 2a operate and having active surfaces in which conveying channels 14 facing the first and second shafts 5 and 6 are preferably defined.

More particularly, the conveying channels are disposed at radially opposite positions and have a radial bulkiness becoming increasingly smaller in an axial direction, towards the extrusion head. The active surfaces of the housing immediately downstream of said initial length have an intermediate length 15 in which ridges 16 are defined which can have different shapes and sizes depending on the thermoplastic material and the sizes of the granular material to be extruded and extend axially and parallelly to each other. These ridges, in cooperation with the externally-threaded lengths 12 on said shafts 5 and 6 enable a constant and efficient feeding of the material to be obtained, even when said material is not yet completely fused, which exactly occurs at the inlet area of housing 4.

As an alternative solution to the above description, a housing internally provided with shapings or female threads can be envisaged. In this case the initial length 11 of the shaft or shafts can afford ridges, threads or in any case surface workings adapted to promote axial transportation of the material.

In accordance with another advantageous aspect of the present invention, it is to note that the first and second shafts have end portions 5a, 6a at a position opposite the extrusion head, which are torsionally connected to a first and second movement-transmitting elements 17 and 18 respectively, that diverge from each other, away from the extrusion head.

Preferably, both the first and second movement-transmitting elements are shafts as well, made divergent by resilient bending.

Obviously this solution is preferred from the point of view of construction simplicity and therefore construction economy, but it is not to be considered in a limiting sense. Actually, other movement-transmitting elements can be likewise employed, provided they are axially and torsionally rigid, but capable of becoming elastically flexible.

In an alternative solution, coupling in series of several elements axially and torsionally linked to each other could be provided.

By virtue of the divergence in the above described movement-transmitting elements, use of a first and a second thrust units 19 and 20 has been made possible, which units consist of bearings of the traditional type, usually available on the market and having a standard radial bulkiness, without hydraulic thrust units or bearings of reduced radial bulkiness expressly planned for this exclusive application being required.

Finally, still as shown in Fig. 6, advantageously, the extrusion device is comprised of a first and a second drive members 22 and 23 independent of each other and connected in a tensional manner to the first and second shafts respectively, so as to set said shafts in rotation at either differentiated or synchronized angular speeds, thereby ensuring the maximum operating flexibility of the whole device.

It is to note that the diverging conformation of the movement-transmitting elements 17 and 18 is completely independent of the structure of shafts 5 and 6 in body 4. In other words, these elements 17 and 18 provided with a diverging conformation could be advantageously employed on traditional twin-screw and multi-screw extrusion devices.

The invention achieves important advantages.

First of all, the device in question substantially achieves all the above listed aims.

In particular, device 1, due to the smooth surface of the first and second (if present) shafts 5 and 6, at least over one prevailing portion 8 thereof, ensures a rolling degree, and consequently homogenization degree, of the employed material never achieved until now.

In addition, with reference to twin-screw or multi-screw extrusion devices, since the first and second shafts are not interpenetrating, neither interpenetrating are shapings on the active surfaces of the housing, the two shafts can be set in rotation at variable independent speeds, without any rotation synchronism being needed to be respected.

This enables an important saving because neither synchronizations of the electronic type with the related automatic controls, nor synchronizations of the mechanical type between the two shafts are needed any longer. In addition, the possibility of setting the two shafts 5 and 6 in angular rotation at speeds different from each other offers the great advantage of enabling blends having different dispersion features to be obtained.

It should be also recognized that, since speeds of the first and second shafts can be suitably modified, the behaviour of the most various typologies of twin-screw extrusion devices can be simulated, while operating on a single machine. In other words, the device in question has such a versatility that it can be easily employed as an extrusion test for the most differentiated machines, obviously if the operating conditions of said machine are known.

This aspect is particularly advantageous when the device 1 is made in such a manner that it can operate to a reduced flow rate because, practically, the behaviour of much bigger apparatuses can be simulated, said device therefore operating at very reduced flow rates while simulating a greater flow rate, which will give rise to an important saving in terms of costs.

It is also to note that, since each of the shafts forming the device is controlled by a motor of its own, protection against possible breakages due to torsional stresses of the shafts can be obtained by adopting breakage-resistant couplings, frictions or torque restrictors independently active on each of said shafts.

It is also important to point out (with reference to both single-screw and twin- or multi-screw extrusion devices) that, since the threaded area determining advance of the material is formed on the active surface of the housing and therefore a fixed portion of the extrusion device, this portion is not subjected to torsion and can therefore be constructed with wear-resisting materials, such as ceramics for example or other materials that can be hardly employed on bodies subjected to torsion, bending or similar deforming stresses.

In addition, with reference to both single-screw and twin- or multi-screw extrusion devices, a relatively important part of the axial thrust is absorbed by the thread tips present on the active surface 9 of housing 4 (carrying out the true driving action), so that the axial thrust exerted on thrust bearings 19 and 20 is greatly reduced.

From the standpoint of performance, with reference in particular to material transportation, importance of the presence of ridges 16 on the initial length of the active surface in body 4 or the initial length of the shaft or shafts (when it is the active surface to be completely threaded) is to be pointed out. As a matter of fact, these features are efficient in causing movement of the material still in a granular state which otherwise could be hardly conveyed to the extrusion head. From the point of view of transportation of the material coming out of the hopper, also of great importance are the conveying channels 14 operating at the shaft ends 5a, 6a opposite the extrusion head 7.

Finally, with reference to the use of shafts of reduced section (even lower than 14-16 mm in diameter) it is particularly important for the movement-transmitting elements 17 and 18 to have been provided in a diverging configuration, so as to enable use of bearings, usually available on the market, of reduced cost and capable of easily resist the axial effort transmitted by the first and second shafts 5 and 6. From this point of view use of shafts deformed by bending and operating elastically is greatly positive, so as to obtain an overall construction which is cheap and particularly efficient and reliable in time.

It is finally to note that the device in accordance with the invention equipped either with one, two or more shafts can be provided with degassing areas known per se, comparable to those already employed in conventional extrusion devices.

## Claims

1. An extrusion device comprising:
- a feed station (2) for at least one predetermined material to be extruded;
- advance means (3) for said material, operatively associated with the feed station and having a housing (4) internally holding one first rotating shaft (5) and at least one second rotating shaft (6), said first shaft (5) having at least one operating length (8), internal to said housing (4), having a smooth surface, the housing (4) at least at said operating length (8) having active surfaces turned towards the first shaft (5) which are provided with shapings (10) to define an axial movement of the material when the first shaft is set in rotation; and
- an outlet orifice (7) operating downstream of the advance means (3);
**characterized in that** it further comprises a second rotating shaft (6) disposed in side-by-side relationship with the first shaft (5) within the housing (4), said second shaft (6) too having at least one operating length (8) with a smooth surface in register with which the housing (4) has active surfaces provided with shapings (10), to define an axial movement of the material when the shafts (5, 6) are set in rotation, the first and the second shafts (5, 6) being either co-rotating or counter-rotating.

2. An extrusion device according to claim 1, **characterized in that** said shapings (10) substantially define female threads the helix of which is of longitudinally constant or variable pitch.

3. An extrusion device according to anyone of the preceding claims, **characterized in that** the first and second shafts (5 and 6) are connected to a first drive member and a second drive member (22 and 23) respectively, which are independent of each other to set said shafts in rotation at differentiated angular speeds.

4. An extrusion device according to anyone of the preceding claims, **characterized in that** said first and second (if present) shafts (5 and 6) have an initial length (11) provided with an outer thread to define a portion facilitating the material movement to the inside of said housing.

5. An extrusion device according to anyone of the preceding claims, **characterized in that** said housing has an initial length (13) wherein the active surfaces are provided with conveying channels (14) facing said first and second shafts.

6. An extrusion device according to claim 5, **characterized in that** said channels (14) have a radial bulkiness becoming increasingly smaller in an axial direction towards said extrusion head.

7. An extrusion device according to claims 1 and 4, **characterized in that** the housing has a portion extending in register with the initial length of the rotating shaft or shafts wherein the active surfaces are provided with axial ridges (16) of predetermined depth and longitudinal extension, running parallelly to each other and cooperating with said outer threads (12) to promote advance of the material being worked.

8. An extrusion device according to claim 1, **characterized in that** said first and second shafts (5 and 6) have end portions, at a position opposite said extrusion head, which are torsionally connected to a first and a second movement-transmitting elements (17 and 18) respectively, which are divergent from each other away from the extrusion head itself.

9. An extrusion device according to claim 8, **characterized in that** said first movement-transmitting element (17) is a shaft made divergent by bending.

10. An extrusion device according to claim 8, **characterized in that** said second movement-transmitting element (18) is a shaft made divergent by bending.

## Patentansprüche

1. Extrusionseinrichtung umfassend:
- eine Station (2) zur Zuführung mindestens eines vorgegebenen Extrusionsmaterials;
- Materialvorschubmittel (3), die der Zuführstation wirksam zugeordnet sind und ein Gehäuse (4) aufweisen, das innen eine erste Drehwelle (5) und mindestens eine zweite Drehwelle (6) aufnimmt, wobei die erste Drehwelle (5) mindestens einen Arbeitsabschnitt (8) innerhalb des Gehäuses (4) mit einer glatten Oberfläche aufweist, wobei das Gehäuse (4) mindestens im Bereich des Arbeitsabschnittes (8) Arbeitsoberflächen aufweist, die in Richtung der ersten Drehwelle (5) gerichtet und mit Profilen (10) zur Festlegung einer axialen Verschiebung des Materials versehen sind, sobald die erste Drehwelle in Drehung versetzt ist; und
- eine Austrittsöffnung (7) nach den Vorschubmitteln (3);
**dadurch gekennzeichnet, dass** sie auch eine zweite Drehwelle (6) umfasst, welche die ersten Drehwelle (5) innerhalb des Gehäuses (4) flankiert, wobei die zweite Drehwelle (6) gleichfalls mindestens einen Arbeitsabschnitt (8) mit glatter Oberfläche aufweist, im Bereich der das Gehäuse 4) Arbeitsoberflächen aufweist, die mit Profilen (10) zur Festlegung einer Axialbewegung des Materials versehen sind, sobald die Drehwellen (5, 6) in Drehung versetzt sind, wobei die erste und die zweite Drehwelle (5, 6) in derselben oder in gegengesetzter Richtung umlaufen.

2. Extrusionseinrichtung nach Anspruch 1, **dadurch gekennzeichnet, dass** die Profile (10) im wesentlichen Muttergewinde mit Windung konstanter oder veränderbarer Längssteigung festlegen.

3. Extrusionseinrichtung nach einem beliebigen der vorstehenden Ansprüche, **dadurch gekennzeichnet, dass** die erste und die zweite Drehwelle (5 und 6) jeweils mit einem ersten Antriebsorgan und einem zweiten Antriebsorgan (22 und 23) verbunden sind, die voneinander unabhängig sind, um die Drehwellen gemäß verschiedenen Winkelgeschwindigkeiten in Drehung zu versetzen.

4. Extrusionseinrichtung nach einem beliebigen der vorstehenden Ansprüche, **dadurch gekennzeichnet, dass** die erste und die zweite Drehwelle (falls vorhanden) (5 und 6) einen Anfangsabschnitt (11) aufweisen, der mit einem Außengewinde versehen ist, um einen Teil festzulegen, der die Bewegung des Materials ins Innere des Gehäuses begünstigt.

5. Extrusionseinrichtung nach einem beliebigen der vorstehenden Ansprüche, **dadurch gekennzeichnet, dass** das Gehäuse einen Anfangsabschnitt (13) aufweist, in dem die Arbeitsoberflächen mit Leitkanälen (14) versehen sind, die der ersten und der zweiten Drehwelle gegenüberliegen.

6. Extrusionseinrichtung nach Anspruch 5, **dadurch gekennzeichnet, dass** die Leitkanäle (14) einen radialen Platzbedarf aufweisen, der allmählich bei axialem Lauf in Richtung des Extrusionskopfes abnimmt.

7. Extrusionseinrichtung nach Anspruch 1 und 4, **dadurch gekennzeichnet, dass** das Gehäuse einen Teil aufweist, der sich im Bereich des Anfangsabschnittes des oder der Drehwelle erstreckt, in dem die Arbeitsoberflächen mit axialen Kerben (16) vorgegebener Tiefe und Längsausdehnung versehen sind, die sich parallel zueinander abwickeln und mit den Außengewinden (12) zusammenwirken, um den Vorschub des Arbeitsmaterials zu begünstigen.

8. Extrusionseinrichtung nach Anspruch 1, **dadurch gekennzeichnet, dass** die erste und die zweite Drehwelle (5 und 6) Endteile aufweisen, die dem Extrusionskopf gegenüberliegen und torsionsmäßig jeweils mit einem ersten und einem zweiten Bewegungsübertragungselement (17 und 18) verbunden sind, die vom Extrusionskopf weg auseinander laufen.

9. Extrusionseinrichtung nach Anspruch 8, **dadurch gekennzeichnet, dass** das erste Bewegungsübertragungselement (17) eine Welle ist, die unter Durchbiegung divergent ist.

10. Extrusionseinrichtung nach Anspruch 8, **dadurch gekennzeichnet, dass** das zweite Bewegungsübertragungselement (8) eine Welle ist, die durch Durchbiegung divergent ist.

## Revendications

1. Appareil d'extrusion comprenant:
- un poste d'alimentation (2) pour au moins une matière prédéterminée à extruder;
- des moyens d'avancement (3) de ladite matière, associés de manière opérationnelle au poste d'alimentation et ayant un corps de logement (4) contenant à son intérieur un premier arbre rotatif (5) et au moins un deuxième arbre rotatif (6), ledit premier arbre (5) ayant au moins un premier tronçon de travail (8), à l'intérieur dudit corps de logement (4), garni d'une surface lisse, le corps de logement (4) présentant, au moins audit tronçon de travail (8), des surfaces actives tournées vers le premier arbre (5) lesquelles sont munies de façonnages (10) à définir un mouvement axial de la matière quand le premier arbre est mis en rotation; et
- un orifice de sortie (7) agissant à l'aval des moyens d'avancement (3);
- **caractérisé en ce qu'**il comporte en outre un deuxième arbre rotatif (6) disposé côte à côte par rapport au premier arbre (5) dans le corps de logement (4), ledit deuxième arbre (6) présentant lui aussi au moins un tronçon de travail (8) garni d'une surface lisse en correspondance avec laquelle le corps de logement (4) présente des surfaces actives munies de façonnages (10), à définir un mouvement axial de la matière quand les arbres (5, 6) sont mis en rotation, les premier et deuxième arbres (5, 6) effectuant une co-rotation ou contre-rotation.

2. Appareil d'extrusion selon la revendication 1, **caractérisé en ce que** lesdits façonnages (10) définissent essentiellement des filetages femelle dont l'hélice est de pas variable ou longitudinalement constant.

3. Appareil d'extrusion selon l'une quelconque des revendications précédentes, **caractérisé en ce que** les premier et deuxième arbres (5 et 6) sont reliés respectivement à un premier organe moteur et à un deuxième organe moteur (22 et 23) lesquels sont indépendants l'un de l'autre pour mettre en rotation lesdits arbres à des vitesses angulaires différenciées.

4. Appareil d'extrusion selon l'une quelconque des revendications précédentes, **caractérisé en ce que** lesdits premier et deuxième (si présent) arbres (5 et 6) ont un tronçon initial muni d'un filetage extérieur à définir une portion facilitant le mouvement de la matière vers l'intérieur dudit corps de logement.

5. Appareil d'extrusion selon l'une quelconque des revendications précédentes, **caractérisé en ce que** ledit corps de logement a un tronçon initial (13) sur lequel les surfaces actives sont munies de canaux d'acheminement (14) en regard desdits premier et deuxième arbres.

6. Appareil d'extrusion selon la revendication 5, **caractérisé en ce que** lesdits canaux (14) ont un encombrement radial devenant toujours plus petit en direction axiale vers ladite tête d'extrusion.

7. Appareil d'extrusion selon les revendications 1 et 4, **caractérisé en ce que** le corps de logement a une portion s'étendant en correspondance avec le tronçon initial de l'arbre ou des arbres rotatifs où les surfaces actives sont munies d'arêtes de profondeur prédéterminée s'étendant longitudinalement, disposées parallèles les unes aux autres et coopérant avec lesdits filetages extérieurs (12) pour favoriser l'avancement de la matière en cours de travail.

8. Appareil d'extrusion selon la revendication 1, **caractérisé en ce que** lesdits premier et deuxième arbres (5 et 6) ont des portions d'extrémité, à une position opposée par rapport à ladite tête d'extrusion, qui sont reliées en torsion respectivement à un premier et à un deuxième élément de transmission du mouvement (17 et 18), lesquels divergent l'un de l'autre en éloignement de la tête d'extrusion elle-même.

9. Appareil d'extrusion selon la revendication 8, **caractérisé en ce que** ledit premier élément de transmission du mouvement (17) est un arbre rendu divergent par flexion.

10. Appareil d'extrusion selon la revendication 8, **caractérisé en ce que** ledit deuxième élément de transmission du mouvement (18) est un arbre rendu divergent par flexion.
